# EUROPÄISCHE PATENTANMELDUNG

(11) **EP 1 111 499 A2**
(43) Veröffentlichungstag der Anmeldung: **27.06.2001**
(21) Anmeldenummer: 00125333.5
(22) Anmeldetag: 30.11.2000
(51) Int. Cl.: G06F 3/14, G09G 5/00

(54) **Graphikausgabeeinheit und Graphikausgabesystem**

(30) Priorität: 21.12.1999 DE 19961726
(71) Anmelder: XSYS Interactive Research GmbH, 78050 Villingen-Schwenningen (DE)
(72) Erfinder: Broghammer, Bernhard, 78144 Tennenbronn (DE); Bühler, Karl, 78073 Bad Dürrheim (DE); Huber, Günther, 78073 Bad Dürrheim (DE); Maier, Michael, 78054 VS-Schwenningen (DE); Mauthe, Gerd, 78595 Hausen o.V. (DE); Sagcob, Thomas, 78166 Donaueschingen (DE); Vogel, Jürgen, 78086 Brigachtal (DE)
(74) Vertreter: Patentanwälte Westphal, Mussgnug & Partner

(57) **Zusammenfassung**

Die Erfindung betrifft eine Graphikausgabeeinheit 2 mit einem Display 3, mit einem Eingang 9, dem ein Interfacekontroller 10 zugeordnet ist, der geeignet ist, die über den Eingang 9 zugeführten Daten aufzubereiten, mit einem Bitstreamdecoder 11, der mit dem Interfacekontroller 10 verbunden ist und der geeignet ist, über den Interfacekontroller 10 erhaltene komprimierte Graphikdaten zu dekomprimieren und in Pixelgraphikdaten zu wandeln, mit einem Graphikkontroller 12, der mit dem Interfacekontroller 10 verbunden ist und der geeignet ist, über den Interfacekontroller 10 erhaltene Vektorgraphikbefehle in Pixelgraphikdaten zu wandeln, und mit einem Graphikchip 13, der mit dem Interfacekontroller 10, dem Graphikkontroller 12 und dem Bitstreamdecoder 11 verbunden ist, der geeignet ist, von diesen über die Verbindungsleitungen erhaltenen Pixelgraphikdaten aufzubereiten und sie anschließend über eine Verbindungsleitung 4 zum Display 3 zuzuführen. Auf dem Display 3 werden damit unabhängig von der ursprünglichen Formatierung der Graphikdaten durch die universelle und flexible Aufbereitung der Graphikdaten in der Graphikausgabeeinheit die Graphikdaten dargestellt.

## Beschreibung

Die Erfindung betrifft eine Graphikausgabeeinheit mit einem Display und einem Graphikchip, der ihm zugeführte Pixelgraphikdaten aufbereitet und sie dem Display über eine Verbindungsleitung zur Wiedergabe zuführt.

Eine derartige Graphikausgabeeinheit ist regelmäßig in einem transportablen Computer, einem sogenannten Laptop, enthalten. Weisen derartige Laptops ein DVD-Laufwerk auf, so zeigen diese Laptops typisch einen MPEG2-Decoder als Bitstreamdecoder, der die komprimierten Äudio- bzw. Videodaten vom DVD-Laufwerk dekomprimiert und die Grafikdaten als Pixelgraphikdaten dem Graphikchip zuführt, welcher sie aufbereitet, indem sie an das Format und die eingestellten Parameter des Displays angepaßt und sie anschließend an das Display des Laptops weitergeleitet werden. Mittels des Displays werden die Pixelgraphikdaten zur optischen Wiedergabe gebracht. Derartige Laptops stellen Stand-Alone-Lösungen dar, die in ihrem Aufbau sehr starr und sehr kostenintensiv sind.

Es sind weiterhin Computer bekannt, die einen Graphikchip und einen abgesetzten, anzuschließenden Bildschirm als Display entsprechend dem vorgeschriebenen Laptop zeigen. Der Grafikchip ist mit einem Graphikkontroller verbunden, mittels dem Vektorgraphikbefehle, wie beispielsweise "Zeichne einen Pfeil an die Position A des Displays", in Pixelgraphikdaten gewandelt, über den Graphikchip aufbereitet und auf dem Bildschirm sichtbar gemacht werden. Diese Computer erweisen sich in der Aufbereitung der Vielfalt der Graphikdatenarten als sehr beschränkt.

Es ist Aufgabe der Erfindung, eine Graphikausgabeeinheit bzw. ein Graphikausgabesystem anzugeben, das möglichst kostengünstig und flexibel die unterschiedlichsten Arten von Graphikdaten für Arbeiten und im Display zur Darstellung bringen kann.

Gelöst wird diese Aufgabe nach der Erfindung durch eine Graphikausgabeeinheit mit den Merkmalen des Anspruchs 1 sowie durch ein Graphikausgabesystem mit den Merkmalen des Anspruchs 8.

Vorteilhafte Weiterbildungen sind in den Unteransprüchen dargestellt.

Gemäß der Erfindung zeigt die Graphikausgabeeinheit einen Eingang, dem Daten der unterschiedlichsten Art zugeführt werden können. Diese Daten werden unmittelbar einem Interfacekontroller am Eingang zugeführt, der die Daten an die entsprechenden Komponenten der Graphikaüsgabeeinheit weiterleitet. Die dem Eingang zugeführten Daten können Graphikdaten, also Vektorgraphikbefehle, Pixelgraphikdaten und/oder komprimierte Graphikdaten sein und/oder Steuerdaten und/oder Audiodaten sein. Je nach Graphikdatenart leitet der Interfacekontroller die Graphikdaten an die entsprechenden Komponenten der Graphikausgabeeinheit weiter. Werden die Graphikdaten dem Interfacekontroller als Pixelgraphikdaten zugeführt, so werden diese Graphikdaten unmittelbar an den Graphikchip weitergeleitet, während Vektorgraphikbefehle vom Interfacekontroller an den Graphikkontroller über eine entsprechende Verbindungsleitung geführt werden, der die Verktorgraphikbefehle in entsprechende Pixelgraphikdaten wandelt und sie anschließend dem Graphikchip zuführt, während komprimierte Graphikdaten einem entsprechenden Bitstreamdecoder zugeführt werden, der geeignet ist die komprimierten Graphikdaten in nicht komprimierte Pixelgraphikdaten zu dekomprimieren und sie anschließend dem Graphikchip über eine entsprechende Verbindungsleitung zuzuführen. Der Graphikchip erhält vom Interfacecontroller, vom Graphikkontroller bzw. vom Bitstreamdecoder einzeln oder zeitgleich Pixelgraphikdaten, die entweder einzeln oder gemeinsam aufbereitet und dem Display zur selektiven oder gemeinsamen Wiedergabe zugeführt werden. Die Aufbereitung in dem Graphikchip umfaßt verschiedene Graphikfunktionen insbesondere Überblendung, Scrolling, Windowing, Rotation, Zoom usw.. Insbesondere können verschiedene Pixelgraphikdaten unterschiedlicher Herkunft und unterschiedlicher, ursprünglicher Graphikdatenart miteinander verknüpft, gemeinsam ausgegeben werden. Beispielsweise kann eine Videosequenz, die der Graphikausgabeeinheit als komprimierte Grafikdaten zugeführt wurde, mit den Pixelgraphikdaten eines Vektorgrafikbefehls, der z.b. ein Logo in der oberen rechten Ecke des Displays zur Wiedergabe bringt, verknüpft werden und gemeinsam Darstellung im Display gebracht werden. Weiterhin können zusätzlich insbesondere zeitgleich der Graphikausgabeeinheit zugeführte Pixelgraphikdaten, die über den Eingang an den Interfacekontroller, an den Graphikchip weitergeleitet werden, unmittelbar allein oder gemeinsam mit anderen Pixelgraphikdaten anderer Herkunft bzw. anderer ursprünglicher Garfikdatenart zur optischen Wiedergabe gebracht werden.

Gemäß der Erfindung ist der Eingang bzw. der Interfacekontroller so ausgebildet, daß sie die unterschiedlichsten Daten erkennen und dementsprechend weiterleiten. Durch diesen sehr flexiblen Aufbau der Graphikausgabeeinheit ist es möglich, nahezu beliebige Arten von Graphikdaten der Graphikausgabeeinheit zuzuführen und zur Darstellung zu bringen. Mithin erweist sich diese Graphikausgabeeinheit als besonders flexibel und auch als sehr kostengünstig, da sie universell einsetzbar ist, ohne daß sie spezielle, teure Chips benötigt. Die verwendeten Komponenten der Graphikausgabeeinheit stellen standardisierte Bauteile dar, die kostengünstig erhältlich sind. Durch den besonderen Aufbau der Graphikausgabeeinheit mit der parallelen Zuführung von Pixelgraphikdaten einerseits vom Interfacecontroller, vom Bitstreamdecoder und andererseits vom Graphikkontroller ist eine sehr flexible, einfach zu handhabende und kostengünstige Struktur für eine sehr mächtige Graphikausgabeeinheit gegeben. Dabei wird insbesondere die Möglichkeit geschaffen, verschiedene Graphikdaten zeitgleich dem Graphikchip zuzuführen, wodurch die Möglichkeit geschaffen ist, diese Daten in Echtzeit miteinander zu verknüpfen und gemeinsam zur Darstellung zu bringen.

Neben dem einen Bitstreamdecoder hat es sich als vorteilhaft erwiesen, einen oder mehrere weitere Bitstreamdecoder vorzusehen, die geeignet und darauf optimiert sind, unterschiedliche komprimierte Graphikdaten zu decodieren und als Pixelgraphikdaten dem Graphikchip zuzuführen. Dabei weist jeder Bitstreamdecoder eine eigene Verbindungsleitung zum Graphikchip auf, so daß eine Verknüpfung der verschiedenen Graphikdaten ermöglicht ist.

Nach einer weiteren bevorzugten Ausführungsform der Graphikausgabeeinheit ist der Graphikchip mit dem Graphikkontroller über eine zweite Verbindungsleitung verbunden, über welche der Graphikchip durch den Graphikkontroller steuerbar ist. Damit ist es möglich, daß über den Eingang zugeführte Steuersignale für die Graphikausgabeeinheit beispielsweise von einer von der Graphikausgabeeinheit abgesetzten Graphikdatenquelle oder von einem abgesetzten Bedienfeld bspw. die Eigenschaften der Graphikausgabeeinheit geändert oder angepaßt werden. Auch kann die Auflösung des Displays abhängig von Steuersignalen von der Graphikdatenquelle je nach Art der übertragenen Graphikdaten gewählt werden. Werden z. B. hochauflösende, sehr detaillierte Graphikdaten, beispielsweise komprimierte Graphikdaten im JPEG- oder MPEG2-Format, übertragen, wird die Auflösung des Displays höher gewählt werden als bei der einfachen Darstellung von Texten oder Textelementen aufgrund von Vektorgarfikbefehlen.

Bei einer kombinierten Darstellung von Pixelgraphikdaten unterschiedlicher Herkunft oder Graphikdatenart wird die Auflösung sich regelmäßig nach der höheren Auflösung richten.

Vorzugsweise ist der Graphikkontroller so ausgebildet, daß die Graphikausgabeeinheit durch ihn gesteuert wird. Insbesondere steuert er das Timing der unterschiedlichen Komponenten der Graphikausgabeeinheit bzw. dessen Ein- und Ausschaltverhalten oder dessen Übergang in einen sogenannten Sleepmode oder dessen Rückkehr aus diesem. Durch die Ausbildung des Graphikcontrollers als Steuereinheit für einzelne Komponenten der Graphikausgabeeinheit insbesondere für den Graphikchip bzw. für die gesamte Graphikausgabeeinheit gelingt es, eine sehr einfache und kostengünstige Struktur für eine Graphikausgabeeinheit zu schaffen, die sich zudem als sehr flexibel und universell einsetzbar erweist. Insbesondere ist sie unabhängig von der Art der Datenquelle bzw. von der Formatierung der Grafikdaten.

Nach einer besonderen Ausbildungsform der Erfindung ist der Interfacekontroller und der Graphikkontroller so ausgebildet, daß sie über ihre Verbindungsleitung sowohl Steuerdaten als auch Vektorgraphikdaten übertragen. Dabei können die Steuerdaten sowohl vom Interfacekontroller zum Graphikkontroller wie auch umgekehrt übertragen werden. Durch diesen Aufbau der Grafikausgabeeinheit ist eine unmittelbare Steuerung des Interfacekontrollers, des Graphikkontrollers und über diese des Graphikchips bzw. der Graphikausgabeeinheit von einer abgesetzten Einheit über eine Verbindungsleitung zum Eingang und damit zum Interfacekontroller der Graphikausgabeeinheit möglich. Insbesondere ist es möglich, die Steuerung der Graphikausgabeeinheit bzw. des Graphikchips gemeinsam durch den Interfacekontroller und den Grafikkontroller vorzunehmen. Hierbei ist bevorzugt eine feste Verteilung der Aufgaben der Steuerung zwischen den beiden Kontrollern gegeben, so daß eine sichere und einfache Steuerung der Graphikausgabeeinheit durch die in jeden Kontroller für die Graphikdatenwandlung bzw. für das Verteilen der Daten notwendige "Intelligenz" ermöglicht ist. Dadurch ist eine Steuerung weiterer Komponenten der Graphikausgabeeinheit und damit der Graphikausgabeeinheit sichergestellt. Damit ist ohne zusätzlichen Kostenaufwand eine sichere und kostengünstige Steuerung der Graphikausgabeeinheit erreicht.

Nach einer bevorzugten Ausbildung der Graphikausgabeeinheit ist der Interfacekontroller als MOST-Interfacekontroller und der Eingang so ausgebildet, daß er Daten entsprechend der MOST-Spezifikation von einem MOST-Bus zugeführt bekommen kann. Der MOST-Bus stellt ein Media-Oriented-Systems-Transport-Bussystem dar, das dezentralisierte Komponenten, das sind Datenquellen bzw. Datensenken, miteinander verbindet. Über den MOST-Bus werden sowohl Steuerdaten als auch sogenannte Quelldaten, das sind Graphik-; Audio- oder Meßdaten, übertragen. Dabei können die Graphikdaten sowohl als komprimierte wie auch als nicht komprimierte wie auch als verschlüsselte oder unverschlüsselte Graphikdaten übertragen werden. Der MOST-Bus ist in dem Artikel "Video and Audio Applications in Vehicles enabled by Networked Systems" ion IEEE 1999 WPM 11.2 beschrieben, der Teil der Offenbarung der Erfindung ist.

Durch die besondere Ausbildung des Interfacecontrollers als MOST- Interfacekontroller ist im besonderen Maße sichergestellt, daß die Graphikausgabeeinheit durch eine beliebige andere Graphikdatenquelle mit ihrem spezifischen Graphikdatenformat die Graphikausgabeeinheit zielgerichtet gesteuert werden kann bzw. die Graphikdaten von ihr auf dem Display zielgerichtet zur Wiedergabe gebracht werden kann. Die Kombination der erfindungsgemäßen Graphikausgabeeinheit mit einem MOST-Kommunikationssystem erweist sich dabei als besonders vorteilhaft, da hierdurch eine besonders flexible, kostengünstige und universell einsetzbare Graphikausgabeeinheit bzw. ein entsprechendes Graphikausgabesystem geschaffen ist. Dabei werden die Verbindungsleitungen zwischen den einzelnen Einheiten des Kommunikationssystems bevorzugt als optische Verbindungsleitungen ausgebildet, wodurch eine Störung durch elektromagnetische Beeinflussung der zu übertragenden Signale von einer Graphikdatenquelle zur Graphikausgabeeinheit, die auch als Graphikdatensenke bezeichnet wird, verhindert ist. Mithin ist dieses Grafikausgabesystem besonders geeignet für eine Verwendung in einem Kraftfahrzeug, zumal in einem Kraftfahrzeug nur sehr wenige Stellen geeignet sind, Einheiten eines derartigen Kommunikationssystems aufzunehmen, weshalb eine dezentralisierte Anordnung der Komponenten besonders vorteilhaft ist.

Die Erfindung wird nachfolgend anhand eines Ausführungsbeispiels unter Bezugnahme auf die Zeichnungen erläutert.
Fig. 1 zeigt ein beispielhaftes Graphikausgabesystem und
Fig. 2 zeigt einen beispielhaften Aufbau einer Graphikausgabeeinheit.

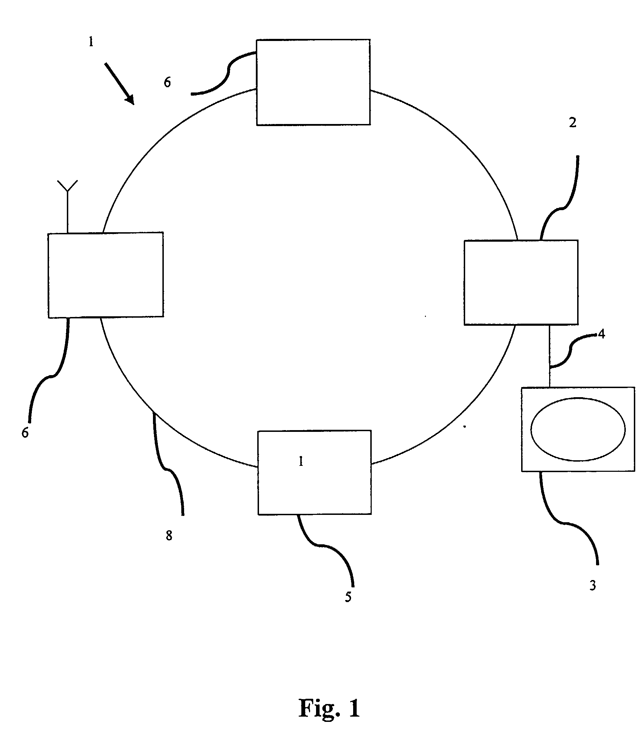

Das in Fig. 1 dargestellte Graphikausgabesystem 1 zeigt mehrere Graphikdatenquellen 6, einen TV-Empfänger 6 und einen DVD-Player 6 sowie ein Bedienfeld 5 und eine Graphikausgabeeinheit 2. Diese sind über ein MOST-Bussystem miteinander verbunden. Die Topologie des MOST-Bus ist ringförmig und die Verbindungen erfolgen mittels einer optischen Verbindungsleitung 8. Über diese Verbindungsleitung 8 werden sowohl Steuerdaten als auch Quelldaten, das sind Audio-, Video- sowie Graphikdaten, zwischen den einzelnen Teilnehmern des Netzwerkes über den MOST-Bus übertragen.

Beispielsweise kann mittels des Bedienfeldes 5 das räumlich insbesondere in einem Kraftfahrzeug, an einer anderen Stelle als die anderen Teilnehmer 2, 3, 6 angeordnet sein. Über das Bedienfeld 5 lassen sich die anderen Teilnehmer 2, 3, 6 steuern. Die Graphikdaten der Komponenten 6 werden über die MOST-Busverbindungsleitung 8 an die Datensenke, das ist die Graphikausgabeeinheit 2 übertragen und dort verarbeitet und über die Verbindungsleitung 4 dem Display 3 zugeführt. Das Display 3 stellt die Graphikdaten der Teilnehmer 6 dar.

Die Graphikdaten von dem TV-Empfänger 6 werden über die Verbindungsleitung 8 des MOST-Busses beispielsweise als Pixelgraphikdaten übertragen und der Graphikausgabeeinheit 2 zugeführt, die eine Darstellung der Pixelgraphikdaten im Display ermöglicht. Die Graphikdaten des DVD-Players 6 werden als komprimierte, insbesondere als MPEG2-komprimierte Graphikdaten der Graphikausgabeeinheit 2 zugeführt, die die komprimierten Graphikdaten dekomprimiert und anschließend aufbereitet und diese Daten anschließend mittels des Displays 3 zur Ausgabe bringt. Das Graphikausgabesystem 1 zeigt mehrere Datenquellen 6 für Graphikdaten, die insbesondere unterschiedliche Formatierungen der Graphikdaten zeigen und die über die Verbindungsleitung 8 des MOST-Busses an die Graphikausgabeeinheit 2 geführt werden.

Neben der reinen Bedieneingabefunktion des Bedienfeldes 5 kann diese Einheit durchaus auch Graphikbefehle, sogenannte Vektorgraphikbefehle, an die Graphikausgabeeinheit 2 senden, die entsprechende Eingabebefehle visuell zur Darstellung bringt. Dementsprechend werden der Graphikausgabeeinheit 2 die unterschiedlichsten Graphikdatenformate zur Verfügung gestellt. Die erfindungsgemäße Graphikausgabeeinheit 2 ist in der Lage, flexibel und universell diese verschiedenen Graphikdatenformate der unterschiedlichen Graphikdatenquellen im Grafikausgabesystem nach dem MOST-Bussystem zu verarbeiten und zur Darstellung zu bringen.

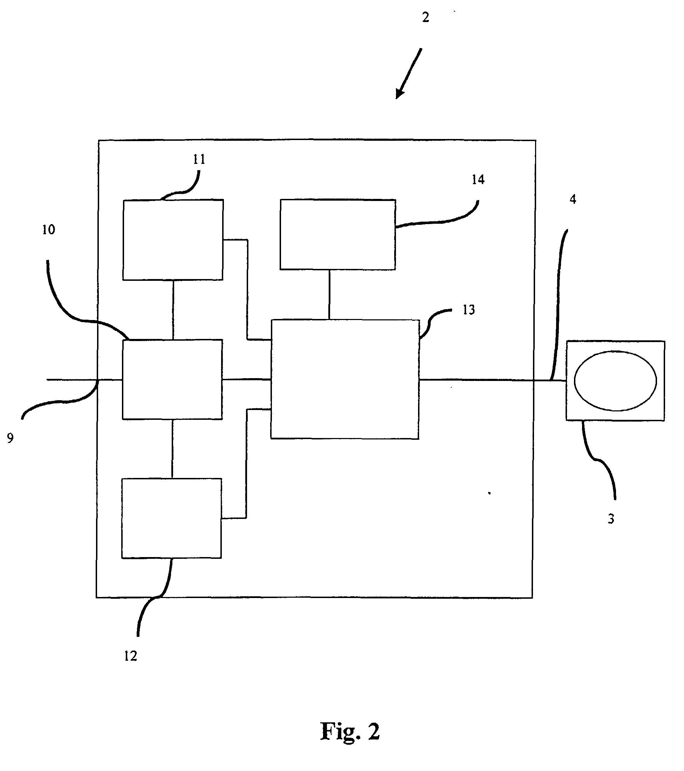

Der Aufbau der Graphikausgabeeinheit 2 ist beispielhaft in Fig. 2 dargestellt. Die Graphikdaten und die Steuerdaten für die Graphikausgabeeinheit 2 werden über die Verbindungsleitung 8 des MOST-Busses dem Eingang 9 der Graphikausgabeeinheit 2 zugeführt. Diese Steuerdaten wie auch Quelldaten werden durch den Interfacekontroller 10, der hier als MOST-Interfacekontroller ausgebildet ist nach ihrer Datenart selektiv und unterschiedlich behandelt.

Die komprimierten, MPEG2-codierten Graphikdaten werden aus dem zugeführten Datenstrom herausgelöst und dem Bitstreamdecoder 11, der als MPEG2-Decoder ausgebildet ist, zugeführt. Dieser decodiert die komprimierten Daten und bildet Graphikdaten im Pixelgraphikdatenformat. Diese werden über eine Verbindungsleitung dem Graphikchip 13 zugeführt.

Werden dem Interfacekontroller 10 vom Eingang 9 unmittelbar Pixelgraphikdaten zur Verfügung gestellt, werden diese von dem Interfacekontroller 10 aus direkt über dessen Verbindungsleitung zum Graphikchip 13 unmittelbar diesem Graphikchip 13 zugeführt.

Dagegen werden Verktorgraphikbefehle von dem Interfacekontroller 10 aus dem zugeführten Datenstrom herausgelöst und über die Verbindungsleitung zum Graphikkontroller 12 diesem zugeführt, der die Vektorgraphikbefehle in Pixelgraphikdaten wandelt und diese dem Graphikchip über eine entsprechende Verbindungsleitung zuführt.

Werden der Graphikausgabeeinheit 2 in dem Datenstrom über den Eingang 9 Steuerdaten zugeführt, so werden diese von dem Interfacekontroller 10 und dem Graphikkontroller 12 interpretiert und in Steuerbefehle für die Graphikausgabeeinheit 2 bzw. für die Displayeinheit 3 gewandelt und die Graphikausgabeeinheit 2 bzw. die Displayeinheit 3 dementsprechend gesteuert. Die Steuerung erfolgt also teilweise durch den Interfacekontroller 10 und teilweise durch den Graphikkontroller 12. Die Steuerung erfolgt dabei in aufeinander abgestimmte Weise.

Dem Graphikchip 13 werden parallel Pixelgraphikdaten über entsprechende Verbindungsleitungen von dem MPEG2-Decoder 11, von dem Interfacekontroller 10 und dem Graphikkontroller 12 zugeführt, die ursprünglich unterschiedlich codierte Graphikdaten dargestellt haben. Diese Pixelgraphikdaten werden in dem Graphikchip aufbereitet, in dem beispielsweise verschiedene der zugeführten Pixelgraphikdaten miteinander vermischt, verbunden und gemeinsam dargestellt werden oder diese Daten durch Überblendung oder Scrolling oder Windowing oder Rotation oder Zoom usw. ineinander übergeführt oder in sich verändert werden. Diese Art der Aufbereitung erfolgt einheitlich in dem Graphikchip 13 unabhängig von der ursprünglichen Herkunft der Pixelgraphikdaten. Dem Graphikchip 13 sind Speicher 14 zugeordnet, die zur schnellen und unmittelbaren Auslagerung von Graphikdaten für die Aufbereitung in dem Graphikchip 13 verwendete werden. Hierdurch gelingt es, die Aufbereitung der Pixelgraphikdaten in dem Graphikchip sehr schnell und sicher und sehr flexibel zu gestalten.

Durch die universelle Gestaltung der Graphikausgabeeinheit 2 und der Möglichkeit, unabhängig von der Art der zugeführten Graphikdaten diese zur Anzeige zu bringen, ist ein sehr kostengünstiger, universeller und sehr flexibler Weg zur Darstellung der in einem Graphikausgabesystem 1 generierten Graphikdaten geschaffen. Die Darstellung erfolgt dabei in einer Displayeinheit 3, die mittels einer Verbindungsleitung 4 mit der Graphikausgabeeinheit 2 insbesondere mit dem Graphikchip 13 verbunden ist.
- 1.: Graphikausgabesystem
- 2.: Graphikausgabeeinheit
- 3.: Display, Displayeinheit
- 4.: Verbindungsleitung
- 5.: Bedieneinheit, Bedienfeld
- 6.: TV-Empfänger, DVD-Player
- 7. 8.: MOST-Busleitung
- 9.: Eingang Graphikausgabeeinheit
- 10.: Interfacekontroller, MOST-Interfacekontroller
- 11.: Bitstreamdecoder, MPEG2-Decoder
- 12.: Graphikkontroller
- 13.: Graphikchip
- 14.: Speicher

## Patentansprüche

1. Grafikausgabeeinheit (2) mit einem Display (3), mit einem Eingang (9), dem ein Interfacekontroller (10) zugeordnet ist, der geeignet ist, die über den Eingang (9) zugeführten Daten aufzubereiten, mit einem Bitstreamdecoder (11), der mit dem Interfacekontroller (10) verbunden ist und der geeignet ist, über den Interfacekontroller (10) erhaltene komprimierte Grafikdaten zu dekomprimieren und in Pixelgrafikdaten wandeln,
mit einem Grafikkontroller (12), der mit dem Interfacekontroller (10) verbunden ist und der geeignet ist, über den Interfacekontroller (10) erhaltene Vektorgrafikbefehle in Pixelgrafikdaten zu wandeln, und mit einem Grafikchip (13), der mit dem Interfacekontroller (10), dem Grafikkontroller (12) und dem Bitstreamdecoder (11) verbunden ist, der geeignet ist, von diesen über die Verbindungsleitungen erhaltene Pixelgrafikdaten aufzubereiten und sie anschließend über eine Verbindungsleitung (4) zum Display (3) diesem zuzuführen.

2. Grafikausgabeeinheit nach Anspruch 1, dadurch gekennzeichnet, daß der Grafikchip (13) mit dem Grafikkontroller (12) über eine zweite Verbindungsleitung verbunden ist, über welche der Grafikchip (13) durch den Grafikkontroller (13) steuerbar ist.

3. Grafikausgabeeinheit nach Anspruch 1 oder Anspruch 2, dadurch gekennzeichnet, daß der Grafikkontroller (12) geeignet ist, die Grafikausgabeeinheit (2) zu steuern.

4. Grafikausgabeeinheit nach Anspruch 2 oder Anspruch 3, dadurch gekennzeichnet, daß sie mit einer Bedieneinheit (5) verbunden ist, über welche der Grafikchip (13) und/oder die Grafikausgabeeinheit (2) steuerbar ist.

5. Grafikausgabeeinheit nach einem der vorstehenden Ansprüche, dadurch gekennzeichnet., daß der Interfacekontroller (10) und der Grafikkontroller (13) geeignet sind, über ihre Verbindungsleitungen sowohl Steuerdaten als auch Vektorgrafikdaten auszutauschen bzw. zu übertragen.

6. Grafikausgabeeinheit nach Anspruch 3 und Anspruch 5, dadurch gekennzeichnet, daß der Interfacekontroller (10) und der Grafikkontroller (13) geeignet sind, über ihre Verbindungsleitungen sowohl Steuerdaten als auch Vektorgrafikdaten auszutauschen und die Grafikausgabeeinheit (2) gemeinsam zu steuern.

7. Grafikausgabeeinheit nach einem der.vorstehenden Ansprüche, dadurch gekennzeichnet, daß der Interfacekontroller (10) ein MOST-Interfacekontroller ist.

8. Grafikausgabesystem mit einer Grafikausgabeeinheit nach Anspruch 7, mit einer oder mehreren getrennt von der Grafikausgabeeinheit (2) ausgebildeten und angeordneten über eine optische Verbindungsleitung (8) verbundenen Grafikdatenquellen (5, 6), wobei diese so ausgebildet sind, daß die generierten Grafikdaten unterschiedlicher Art über die optische Verbindungsleitung der Grafikausgabeeinheit (2) zuführbar sind und durch diese optisch darstellbar sind.
